(19) **Europäisches Patentamt**
**European Patent Office**
**Office européen des brevets**

(11) **EP 3 012 946 B1**

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(51) Int Cl.:
***H02K 11/40*** *(2016.01)*

(21) Anmeldenummer: **15171451.6**

(22) Anmeldetag: **10.06.2015**

(54) **ERDUNGSVORRICHTUNG**

EARTHING DEVICE

DISPOSITIF DE MISE A LA TERRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.10.2014 DE 102014115291**

(43) Veröffentlichungstag der Anmeldung:
**27.04.2016 Patentblatt 2016/17**

(73) Patentinhaber: **ebm-papst Mulfingen GmbH & Co. KG**
**74673 Mulfingen (DE)**

(72) Erfinder:
• **STURM, Michael**
**97980 Bad Mergentheim (DE)**
• **STRÖBEL, Wolfgang**
**74572 Blaufelden (DE)**

(74) Vertreter: **Peter, Julian**
**Staeger & Sperling**
**Partnerschaftsgesellschaft mbB**
**Sonnenstrasse 19**
**80331 München (DE)**

(56) Entgegenhaltungen:
**EP-B1- 1 460 885      JP-A- 2002 132 072**
**US-B2- 8 199 453**

**Beschreibung**

Die Erfindung betrifft eine Erdungsvorrichtung zur Vermeidung rotorbedingter Lagerströme bei einem Elektromotor mit einem elektrisch leitfähigen Ringelement mit daran angeordneten Haltemitteln, an denen Faserbündel befestigt sind, über welche die elektrische Ableitung von statischen Aufladungen zu einem Ableitelement erfolgen kann, so dass sie das Lager nicht erreichen.

Aus dem Stand der Technik ist bekannt, dass bei Elektromotoren eine im Rotor induzierte und über die Rotorwelle geleitete Spannung eine schädigende Wirkung auf die Wellenlager haben ("Lagerströme"). Sobald die induzierten Spannungen den Widerstand des Lagerschmierstoffes überwinden, entladen sie sich über das Lager und beschädigen die Laufbahn der Kugeln in Form von Schmelzkratern, Anfressen und Profilierungsschäden. Dies führt zunächst zu Lagergeräuschen und einem vorzeitigen Totalausfall.

Zur Überwindung wurden im Stand der Technik bereits Lösungen vorgeschlagen, bei denen die Rotorwelle vollständig elektrisch isoliert wird. Hierbei besitzt die Rotorwelle in den Lagerbereichen Absätze, welche mit Kunststoff umspritzt werden. Ferner werden Distanzscheiben aus elektrisch isolierendem Hartgewebe eingesetzt, um den direkten Kontakt (rotorseitig und statorseitig) zwischen der eingepresster Welle im Rotor und den Lagern zu verhindern.

Nachteilig an der Kunststoffumspritzung ist, dass sie besonders bei Wärme zum Kriechen bzw. Setzen neigt und langfristig kein robustes System darstellt. Auch ist der Einsatz beschränkt, da sie beispielsweise nicht für Antriebsmotoren geeignet ist, die aufgrund der erhöhten Drehzahlen und der zusätzlichen Radialkraft eine schwellende Belastung auf die Umspritzung ausüben. Ein weiterer Nachteil ist, dass die Umspritzung nicht nur elektrisch isolierend, sondern auch thermisch isolierend wirkt. Dies bewirkt wiederum eine unerwünschte Erhöhung der Lagertemperatur. Dabei ist hauptsächlich das rotorseitige Lager betroffen, da dieses von beiden Lagern die höchste Belastung erfährt und zumeist am Ende der Statorbuchse sitzt. Bei einer derartigen Anordnung kann die Wärme ausschließlich über die bereits von der Wicklung erwärmte Statorbuchse abgeführt werden.

Eine weitere Möglichkeit zur Vermeidung von Lagerströmen ist der Einsatz von Hybrid-Kugellagern, bei denen Keramikkugeln das elektrische Leiten verhindern. Dies ist jedoch sehr kostenintensiv.

Weitere Hintergrundinformationen und Beispiele für Vorrichtungen zum Ableiten von Aufladungen werden beispielsweise in den Patentschriften EP1460885B1 und EP1523086B1 beschrieben, wonach Ringelemente mit Borsten an einer Welle angreifen, um statische Aufladungen über die Welle abzuleiten. Weiteren Stand der Technik im vorliegenden technischen Gebiet offenbart die US 8,199,453 B2.

Vor diesem Hintergrund liegt der Erfindung die Aufgabe zugrunde, eine gegenüber bekannten Lösungen in ihrer Wirkung verbesserte und kostengünstigere Vorrichtung bereit zu stellen, mit der rotorbedingte statische Aufladungen bei Elektromotoren derart ableitbar sind, dass sie nicht als Lagerströme durch oder über das bzw. die Lager der Rotorwelle fließen.

Diese Aufgabe wird durch die Merkmalskombination gemäß Patentanspruch 1 gelöst, Dabei wird eine Erdungsvorrichtung umfassend ein elektrisch leitfähiges Ringelement mit daran angeordneten Haltemitteln vorgesehen, an denen Faserbündel befestigt sind, über welche die elektrische Ableitung einer statischen Aufladung zu mindestens einem Ableitelement erfolgen kann, wobei die Faserbündel gegenüber einer zu einer axialen Mittellinie des Ringelements senkrechten Ebene (Radialebene) und/oder einer Axialebene über eine Schrägstellung der Haltemittel in einer schrägen Winkelstellung ausgerichtet befestigt sind und eine von den Haltemitteln des Ringelements vorstehende Länge aufweisen, die größer als notwendig ist, einen radialen Abstand des Ringelements bzw. der Haltemittel des Ringelements zu dem Ableitelement zu überstrecken.

Die Erdungsvorrichtung wird bei einem Elektromotor vorzugsweise als Ringelement zwischen der Statorbuchse und dem Wellenlager eingesetzt, so dass rotorbedingte Aufladungen über die Statorbuchse unmittelbar über die Rotorwelle abführbar sind, ohne dass sie zu dem Wellenlager gelangen. Dabei ist die Erdungsvorrichtung mit dem Ringelement derart auszubilden, dass ihr elektrischer Widerstand geringer ist als derjenige des Wellenlagers. Vorzugsweise sollte die Materialdicke des Ringelements möglichst dünn gewählt werden, damit sich dieses ohne großen Kraftaufwand leicht in Form bringen lässt und gleichzeitig aufgrund des geringen Materialaufwandes kostengünstig ist. Jedoch muss die Materialdicke auch so dick ausgeführt sein, dass das Ringelement die Lagerströme über dessen Materialquerschnitt sicher abführen kann. Deshalb wird erfindungsgemäß eine Dicke des Ringelements von 0,2 - 5 mm, insbesondere 0,5 - 1 mm bevorzugt. Als Material kommt für das Ringelement ein gestanztes Metallblech aus Messing oder Bronze zum Einsatz. Die Erdungsvorrichtung ist somit sehr kostengünstig herstellbar.

Die Kostenreduzierung wird durch die grundsätzliche Ausbildung der Erdungsvorrichtung als elektrisch leitfähiges metallenes Ringelement erreicht, die verbesserte und langlebigere Ableitung der statischen Aufladungen wird über die Kombination aus der schräge Winkelstellung der Faserbündel zu dem Ableitelement sowie die Überlänge des von dem Ringelement vorstehenden Abschnitts der Faserbündel gewährleistet. Die schräge Winkelstellung der Faserbündel erfolgt erfindungsgemäß gegenüber einer oder beiden senkrechten Ebenen zu der axialen Mittellinie des Ringelements, d.h. die Faserbündel sind einfach oder vorzugsweise sogar doppelt (in zwei Richtungen) geneigt an dem Ringelement angeordnet.

In einer vorteilhaften Ausführung der Erfindung ist vorgesehen, dass die Erdungsvorrichtung dadurch gekennzeichnet, dass die Faserbündel als erste Neigung gegenüber der Radialebene des Ringelements in einem Winkel $\alpha$ von 5 - 45°, insbesondere 5 - 30°, weiter bevorzugt 10 - 25°, ausgerichtet befestigt sind.

In einer weiter vorteilhaften Ausführung der Erfindung ist vorgesehen, dass die Erdungsvorrichtung dadurch gekennzeichnet, dass die Faserbündel als zweite Neigung gegenüber einer Axialebene des Ringelements in einem Winkel $\beta$ von 5 - 15° ausgerichtet befestigt sind.

Zwischen des Faserbündeln und der Rotorwelle entsteht eine gas- und flüssigkeitsdichte Verbindung mit durch die schrägen Winkelstellung(en) erzeugtem sehr geringem Kontaktwiderstand. Die Verlängerung der Faserbündel über die eigentlich nötige Länge zur Berührung des Ableitelements führt ebenfalls zu einer verbesserten Kontaktierung ohne erhöhten Verschleiß. Als besonders günstig erweist sich eine Ausführung, bei der die von dem Ringelement vorstehende Länge der Faserbündel um 5 - 15%, vorzugsweise 10% größer ist als der radiale Abstand des Ringelements zu dem Ableitelement.

Ferner ist eine Ausführung der Erfindung vorteilhaft, wonach sich an dem Ringelement in radialer Richtung Stege erstrecken, die jeweils mit Laschen ausgebildet sind, an denen die Faserbündel angecrimpt sind. Grundsätzlich umfasst die Erfindung Ausführungen des Ringelements mit radial einwärts und radial auswärts gerichteten Stegen und Faserbündeln. Bei einer Lösung mit radial einwärts gerichteten Stegen und Faserbündel dient als Ableitelement und Kontakt für die Faserbündel die rotierende Rotorwelle. Bei einer Lösung mit radial auswärts gerichteten Stegen und Faserbündeln dient als Ableitelement und Kontakt für die Faserbündel die Statorbuchse, wobei das Ringelement an der Rotorwelle befestigt ist und mit rotiert.

In einem speziellen Ausführungsbeispiel der Erdungsvorrichtung ist vorgesehen, dass an den jeweiligen Laschen jeweils ein Vorsprung ausgebildet ist, welcher die Faserbündel in ein erstes und zweites Faserbündel aufteilt. Die aufgeteilten ersten und zweiten Faserbündel erstrecken sich dadurch getrennt voneinander und ermöglichen jeweils eine eigene drehrichtungsunabhängig elektrische Ableitung der Lagerströme zu mindestens einem Ableitelement. Die Aufteilung in zwei Faserbündel ermöglicht praktisch ein "Umgreifen" der Oberseite der Rotorwelle und stellt eine sichere Kontaktierung dar, unabhängig davon, in welche Richtung die Rotorwelle rotiert.

Ferner sind Ausführungen der Faserbündel günstig, bei denen diese durch Fasern unterschiedlichen Materials gebildet sind und Karbonfasern und Metall- oder Kunststofffasern umfassen. Zur Erhöhung der Selbstschmierung können zusätzlich Graphitfasern enthalten sein.

Zur Vergrößerung der Anlagefläche und mithin weiter verbesserten Kontaktierung weisen die Faserbündel in einer Ausführungsvariante im Querschnitt eine ovale Form auf. Die Ausrichtung der Faserbündel erfolgt in den Laschen dann vorteilhafterweise derart, dass der breitere Randabschnitt der Ovalform in Umfangsrichtung zeigt und somit an dem Ableitelement zur Anlage kommt.

In einer ferner vorteilhaften Ausführungsform der Erfindung weist die Erdungsvorrichtung zusätzlich eine an dem Ringelement befestigte Federscheibe auf, so dass Ringelement und Federscheibe als eine Baueinheit zur Montage ausgebildet sind. Die Federscheibe wird über Schweißpunkte oder an dem Ringelemente integrierte Klammern befestigt. Günstig ist eine Ausführungsvariante der Federscheibe in einer Wellenform, wobei diese vorteilhafterweise an den wiederkehrenden Wellentälern an dem Ringelement anliegt und dort befestigt ist. Auch ist vorteilhaft für die Montage, wenn die Abmessungen der Federscheibe im Wesentlichen derjenigen des Ringelements entsprechen.

Zur besseren Montierbarkeit ist es in einigen Aufbauten ferner von Vorteil, das Ringelement als offenen Ring mit einer Öffnung in seinem Umfang auszubilden. Erfindungsgemäß wird dann vorgesehen, dass die Öffnung über ein Verbindungsmittel verschließbar ist. Als Verbindungsmittel können eine T-Nut-Lösung oder ein Schwalbenschwanzeingriff vorgesehen werden.

Schließlich ist günstig, wenn das Ringelement in Umfangsrichtung wiederkehrende Einprägungen aufweist, welche eine Federfunktion bereitstellen, um im montierten Zustand eine axiale Verspannung dauerhaft, auch bei Temperaturwechseln, zwischen der Anlagefläche des Nachbarbauteils (meist die Statorbuchse) und der Anlagefläche des Lagers zu bewirken.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1   eine perspektivische Ansicht einer Erdungsvorrichtung;

Fig. 2   eine schematische Seitenansicht der Erdungsvorrichtung an einer Rotorwelle als Ableitelement mit einer ersten Winkelstellung der Faserbündel;

Fig. 3   eine schematische Vorderansicht der Erdungsvorrichtung an einer Rotorwelle als Ableitelement mit einer zweiten Winkelstellung der Faserbündel;

Fig. 4     eine perspektivische Ansicht einer Erdungsvorrichtung mit Federscheibe;

Fig. 5     eine beispielhafte Teilschnittansicht der Erdungsvorrichtung im eingebauten Zustand;

Fig. 6     ein illustratives Beispiel einer Ausgestaltung der Lasche des Ringelements der Erdungsvorrichtung;

Fig. 7     ein illustratives Beispiel einer Erdungsvorrichtung mit einer Ausführung der Lasche gemäß Fig. 6; und

Fig. 8     eine alternative Ausführung des Ringelements der Erdungsvorrichtung in perspektivischer Ansicht.

Die Figuren sind beispielhaft schematisch. Gleiche Bezugszeichen benennen gleiche Teile in allen Ansichten.

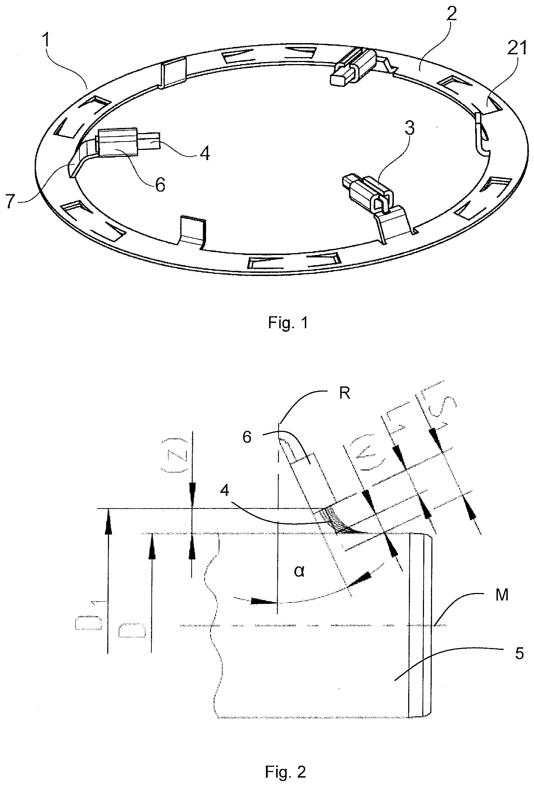

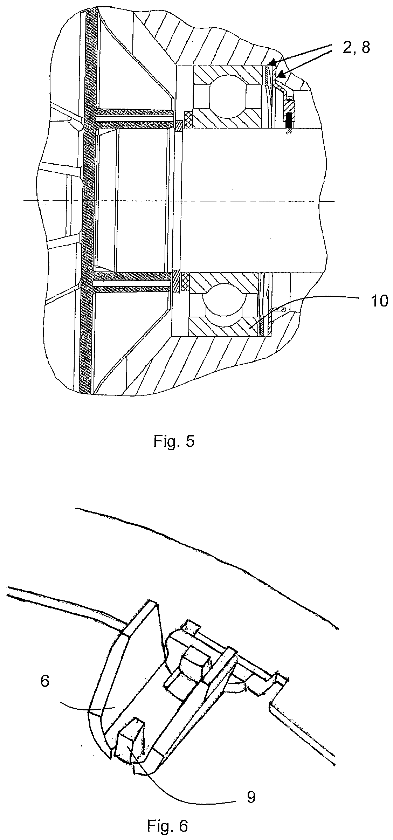

In Fig. 1 ist die Erdungsvorrichtung 1 in perspektivischer Ansicht dargestellt. Sie umfasst das elektrisch leitfähige metallene Ringelement 2 und drei in Umfangsrichtung daran einteilig ausgebildete Haltemittel 3, die als Stege 7 mit Laschen 6 gebildet sind. Die Stege 7 erstrecken sich schräg, d.h. axial und radial einwärts und weisen an ihrer radialen Innenseite die einstückig daran ausgebildeten Laschen 6 auf. Die Anzahl der Haltemittel 3 kann auch vergrößert werden soweit festgestellt wird, dass die Ableitfähigkeit nicht ausreicht. In jeder Lasche 6 ist ein Faserbündel 4 durch kostengünstiges Crimpen befestigt. Am Ringelement 2 sind in Umfangsrichtung Einprägungen 21 vorgesehen, welche eine Federfunktion bereitstellen und im montierten Zustand eine dauerhafte axiale Verspannung zu sichern, wie dies in Fig. 5 beispielhaft dargestellt ist.

Fig. 2 zeigt eine seitliche Ansicht der Erdungsvorrichtung 1 an einer Rotorwelle 5 als Ableitelement mit einer ersten schrägen Winkelstellung (Winkel $\alpha$) der Faserbündel 4 sowie einer Faserlänge, die größer als notwendig ist, den radialen Abstand des Ringelements zu dem Ableitelement 5 zu überstrecken.

Dabei werden die dargestellten Werte definiert als:

L1 = Länge der Faserbündel mit schräger Winkelstellung gegenüber einer Radialebene R des Ringelements 2

Ls1 = Länge L1 + zusätzliche Verlängerung der Faserbündel um eine Länge v

Z = radialer Abstand des Ringelements 2 zu dem Ableitelement 5

D = Durchmesser Rotorwelle 5

D1 = Durchmesser Rotorwelle 5 + radialer Abstand des Ringelements (2) zu dem Ableitelement 5

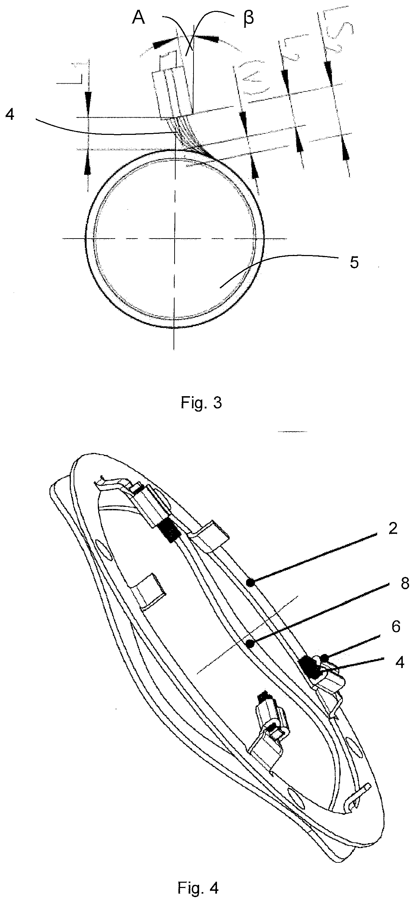

Die bevorzugte schräge Winkelstellung der Faserbündel 4 gegenüber der Radialebene R des Ringelements 2 liegt in einem Winkelbereich von $\alpha$ = 5 - 45°, weiter bevorzugt 5 - 30°, und wird über die Schrägstellung der Haltemittel 3 realisiert. In der gezeigten Ausführung liegt die Winkelstellung bei 25°, wobei $\alpha$ am Randabschnitt der Lasche 6 gemessen wird. Zur Überstreckung des Abstands zwischen dem Ringelement 2 bzw. den Laschen 6 der Haltemittel 3 und der Rotorwelle 5 ist bei einer geraden Ausrichtung der Stege 7 und Laschen 6 eine Faserlänge Z, bei einer schrägen Ausrichtung gemäß Figur 2 und Figur 3 eine Faserlänge L1 nötig, jedoch wird die Länge der Faserbündel 4 auf eine Länge Ls1 bzw. Ls2 vergrößert, um eine Vorspannung des Kontakts zu der Rotorwelle 5 zu gewährleisten.

Figur 3 zeigt eine schematische Vorderansicht der Erdungsvorrichtung 1 an der Rotorwelle 5 mit einer zweiten schrägen Winkelstellung der Faserbündel 4. Dabei werden die dargestellten Werte definiert als:

L2 = Länge der Faserbündel mit schräger Winkelstellung gegenüber einer Axialebene A des Ringelements 2

Ls2 = Länge L2 + zusätzlich Verlängerung der Faserbündel um eine Länge v

Die Faserbündel 4 werden gegenüber der Axialebene des Ringelements 2 in einem Winkel $\beta$ von 5 - 15° ausgerichtet jeweils an der Lasche 6 befestigt, wobei die Schrägstellung über die Lasche 6 realisiert ist. In der gezeigten Ausführung ist beispielhaft ein Winkel $\beta$ von 12° gewählt, wobei $\beta$ am Randabschnitt der Lasche 6 gemessen wird.

Die einzelnen Werte berechnen sich standardgemäß nach nachfolgender Übersicht:

$$z = \frac{D1 - D}{2}$$

$$L1 = \frac{z}{\cos \alpha} \qquad L1 = \frac{\frac{D1 - D}{2}}{\cos \alpha}$$

$$LS1 = L1 + \left(D * \frac{v}{100}\right)$$

$$L2 = \frac{z}{\cos \alpha} \qquad L2 = \frac{\frac{D1 - D}{2}}{\cos \alpha}$$

$$LS2 = L2 + \left(D * \frac{v}{100}\right)$$

## Übersicht 1

Figur 4 zeigt ein Ausführungsbeispiel der Erdungsvorrichtung 1 mit einer Federscheibe 8 in einer perspektivischen Ansicht. Die Federscheibe 8 ist wellenförmig ausgebildet und an wiederkehrenden Wellentälern an dem Ringelement 2 verschweißt. Alternativ können auch andere im Stand der Technik bekannte Befestigungslösungen wie Klammern oder dergleichen verwendet werden. Das Ringelement 2 und die Federscheibe 8 bilden eine Baueinheit, die zusammen montiert wird und das Ringelement 8 durch die Vorspannkraft der Federscheibe 8 an der gewünschten Position gehalten wird. Dabei weist die Federscheibe 8 dieselben Abmessungen wir das Ringelement 2 auf. Figur 5 zeigt beispielhaft eine derartige Einbausituation an einem Wellenlager 10, wobei die schräge Winkelstellung und Faserüberlange zwar vorhanden, jedoch nicht zu erkennen ist. Die Erdungsvorrichtung 1 mit Ringelement 2 und Federscheibe 8 wird zwischen Statorbuchse und Wellenlager 10 positioniert und bildet eine Erdung für statische Aufladungen über die Rotorwelle zum Schutz des Wellenlagers 10 vor Lagerströmen.

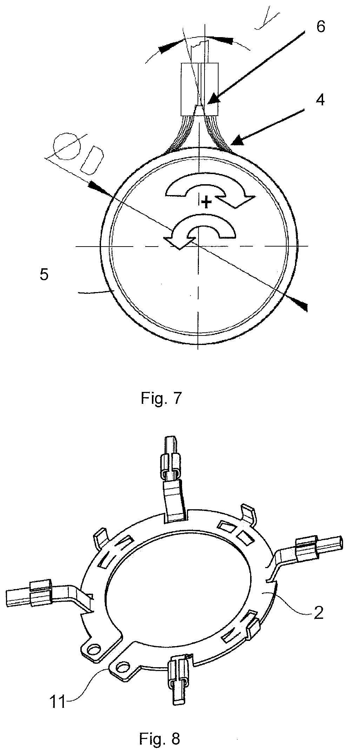

Figur 6 zeigt ein illustratives Beispiel einer Ausgestaltung der Lasche 6 des Ringelements 2 der Erdungsvorrichtung 1 mit einem als Nase ausgebildeten Vorsprung 9 zum Aufteilen der Faserbündel 4 in erste und zweite Faserbündel, wie es in Figur 7 dargestellt ist. Die Aufteilung mittels Vorsprung 9 ermöglicht ein Anliegen der Faserbündel 4 unabhängig von der durch Pfeile dargestellten Drehrichtung der Rotorwelle 5, wobei die Faserbündel 4 eine Außenfläche der Rotorwelle 5 teilweise umgreifen und somit eine sichere Kontaktierung in beiden Drehrichtungen sicherstellen. Die schrägen Winkelstellungen und Verlängerung der Faserbündel entsprechen denjenigen aus Figur 2 und 3.

In Figur 8 ist eine alternative Ausführungsform der Erdungsvorrichtung 1 aus Figur 1 dargestellt, wobei sich die Haltemittel 3 nach radial außen erstrecken. Das Ringelement 2 wird dabei an der Rotorwelle 5 befestigt, so dass die Faserbündel 4 an der Statorbuchse entlang gleiten und die Erdung gewährleisten. Es handelt sich praktisch um eine kinematische Umkehr der Lösung aus den vorigen Ausführungen, so dass die offenbarten Merkmale im Übrigen unmittelbar anwendbar sind. Das Ringelement 2 ist als offener Ring mit einer Öffnung 11 in seinem Umfang ausgebildet ist, wobei die Öffnung 11 eine vergleichbare Funktion eines Sicherungsrings hat und/oder über ein Verbindungsmittel verschließbar ist. Die offene Ausbildung kann für verschiedene Einbausituation von Vorteil sein.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Es können alle offenbarten Merkmale beliebig miteinander kombiniert werden, soweit dies technisch möglich ist. Beispielsweise kann auch das Ringelement aus Figur 1 als offener Ring ausgebildet sein.

**Patentansprüche**

1. Erdungsvorrichtung zur Vermeidung rotorbedingter Lagerströme bei einem Elektromotor umfassend ein elektrisch leitfähiges Ringelement (2) mit daran angeordneten Haltemitteln (3), an denen Faserbündel (4) befestigt sind, über welche eine elektrische Ableitung einer statischen Aufladung zu mindestens einem Ableitelement (5) erfolgbar ist, **dadurch gekennzeichnet, dass** die Faserbündel (4) gegenüber einer zu einer axialen Mittellinie (M) des Ringelements (2) senkrechten Radialebene (R) und/oder einer Axialebene (A) über eine Schrägstellung der Haltemittel (3) in einer schrägen Winkelstellung ausgerichtet befestigt sind und eine von den Haltemitteln (3) des Ringelements (2) vorstehende Länge aufweisen, die größer als notwendig ist, einen radialen Abstand des Ringelements (2) zu dem Ableitelement (5) zu überstrecken.

2. Erdungsvorrichtung nach Anspruch 1, **dadurch gekennzeichnet, dass** die Faserbündel (4) gegenüber der Radialebene (R) des Ringelements (2) in einem Winkel α von 5 - 45°, insbesondere 5 - 30° ausgerichtet befestigt sind.

3. Erdungsvorrichtung nach einem der vorigen Ansprüche, **dadurch gekennzeichnet, dass** die Faserbündel (4) gegenüber der Axialebene (A) des Ringelements (2) in einem Winkel β von 5 - 15° ausgerichtet befestigt sind.

4. Erdungsvorrichtung nach einem der vorigen Ansprüche, **dadurch gekennzeichnet, dass** die von dem Ringelement (2) vorstehende Länge der Faserbündel (4) um 5 - 15%, insbesondere 10% größer ist als der radiale Abstand (L1) des Ringelements (2) zu dem Ableitelement (5).

5. Erdungsvorrichtung nach einem der vorigen Ansprüche, **dadurch gekennzeichnet, dass** an dem Ringelement (2) sich in radialer Richtung erstreckende Stege (7) jeweils mit Laschen (6) als Haltemittel (3) ausgebildet sind, an denen die Faserbündel (4) angecrimpt sind.

6. Erdungsvorrichtung nach einem der vorigen Ansprüche, **dadurch gekennzeichnet, dass** die Faserbündel (4) durch Fasern unterschiedlichen Materials gebildet sind und Karbonfasern und Metall- oder Kunststofffasern und/oder Graphitfasern umfassen.

7. Erdungsvorrichtung nach einem der vorigen Ansprüche, **dadurch gekennzeichnet, dass** die Faserbündel (4) im Querschnitt eine ovale Form aufweisen.

8. Erdungsvorrichtung nach einem der vorigen Ansprüche, **dadurch gekennzeichnet, dass** an dem Ringelement (2) eine Federscheibe (8) befestigt ist, so dass Ringelement (2) und Federscheibe (8) als eine Baueinheit zur Montage ausgebildet sind.

9. Erdungsvorrichtung nach dem vorigen Anspruch, **dadurch gekennzeichnet, dass** die Federscheibe (8) wellenförmig ausgebildet ist und an wiederkehrenden Wellentälern an dem Ringelement (2) befestigt ist.

10. Erdungsvorrichtung nach den vorigen Ansprüchen 8 bis 9 **dadurch gekennzeichnet, dass** die Federscheibe (8) eine Abmessung aufweist, die derjenigen des Ringelements (2) entspricht.

11. Erdungsvorrichtung nach einem der vorigen Ansprüche, **dadurch gekennzeichnet, dass** das Ringelement (2) eine Dicke von 0,2 - 5 mm, insbesondere 0,5 - 1 mm aufweist.

12. Erdungsvorrichtung nach einem der vorigen Ansprüche, **dadurch gekennzeichnet, dass** das Ringelement (2) ein gestanztes Metallblech aus Messing oder Bronze ist.

13. Erdungsvorrichtung nach einem der vorigen Ansprüche, **dadurch gekennzeichnet, dass** das Ringelement (2) als offener Ring mit einer Öffnung in seinem Umfang ausgebildet ist, wobei die Öffnung über ein Verbindungsmittel verschließbar ist.

14. Erdungsvorrichtung nach einem der vorigen Ansprüche, **dadurch gekennzeichnet, dass** das Ringelement (2) in Umfangsrichtung wiederkehrende Einprägungen (21) aufweist, welche eine Federfunktion bereitstellen.

**Claims**

1. An earthing device for preventing rotor-caused bearing currents in an electric motor comprising an electrically conductive ring element (2) with holding means (3) arranged thereon, on which fiber bundles (4) are attached, by means of which an electrical discharge of a static charge at least to a discharge element (5) can occur, **characterized in that** the fiber bundles (4) are attached oriented in an inclined angular position with respect to a radial plane (R) perpendicular to an axial midline (M) of the ring element (2) and/or with respect to an axial plane (A) via an inclined position of the holding means (3) and have a length protruding from the holding means (3) of the ring element (2), which is greater than necessary in order to extend over a radial distance of the ring element (2) to the discharge element (5).

2. The earthing device according to Claim 1, **characterized in that** the fiber bundles (4) are attached oriented at an angle α of 5-45°, in particular 5-30°, with respect to the radial plane (R) of the ring element (2),

3. The earthing device according to either of the preceding claims, **characterized in that** the fiber bundles (4) are attached oriented at an angle β of 5-15° with respect to the axial plane (A) of the ring element (2).

4. The earthing device according to any one of the preceding claims, **characterized in that** the length of the fiber bundles (4) protruding from the ring element (2) is greater by 5-15%, in particular 10%, than the radial distance (L1) of the ring element (2) to the discharge element (5).

5. The earthing device according to any one of the preceding claims, **characterized in that**, on the ring element (2), bars (7) extending in radial direction are formed, each with brackets (6) as holding means (3) on which the fiber bundles (4) are crimped.

6. The earthing device according to any one of the preceding claims, **characterized in that** the fiber bundles (4) are formed from fibers made of different materials and comprise carbon fibers, and metal or plastic fibers, and/or graphite fibers.

7. The earthing device according to any one of the preceding claims, **characterized in that** the fiber bundles (4) have an oval shape in cross section.

8. The earthing device according to any one of the preceding claims, **characterized in that**, on the ring element (2), a spring plate (8) is attached, so that ring element (2) and spring plate (8) are formed as one component for the installation.

9. The earthing device according to the preceding claim, **characterized in that** the spring plate (8) has a wavy design and is attached at recurring wave troughs on the ring element (2).

10. The earthing device according to the preceding Claims 8 to 9, **characterized in that** the spring plate (8) has a dimension corresponding to that of the ring element (2).

11. The earthing device according to any one of the preceding claims, **characterized in that** the ring element (2) has a thickness of 0.2-5 mm, in particular 0.5-1 mm.

12. The earthing device according to any one of the preceding claims, **characterized in that** the ring element (2) is a punched metal sheet made of brass or bronze.

13. The earthing device according to any one of the preceding claims, **characterized in that** the ring element (2) is designed as an open ring with an opening in its periphery, wherein the opening can be closed via a connection means.

14. The earthing device according to any one of the preceding claims, **characterized in that** the ring element (2) comprises repeating impressions (21) in peripheral direction, which provide a spring function.

**Revendications**

1. Dispositif de mise à la terre servant à éviter des courants de palier liés au rotor dans un moteur électrique comprenant un élément annulaire (2) électroconducteur pourvu de moyens de retenue (3) disposés au niveau de ce dernier, au niveau desquels des faisceaux de fibres (4) sont fixés, par l'intermédiaire desquels une dérivation électrique d'une charge statique en direction au moins d'un élément de dérivation (5) peut avoir lieu, **caractérisé en ce que** les faisceaux de fibres (4) sont fixés, en étant orientés dans une position angulaire inclinée, par l'intermédiaire d'une position inclinée des moyens de retenue (3) par rapport à un plan radial (R) perpendiculaire par rapport à une ligne médiane (M) axiale de l'élément annulaire (2) et/ou à un plan axial (A) et présentent une longueur faisant saillie des moyens de retenue (3) de l'élément annulaire (2), laquelle est plus grande que nécessaire pour dépasser un espacement radial de l'élément annulaire (2) par rapport à l'élément de dérivation (5).

**2.** Dispositif de mise à la terre selon la revendication 1, **caractérisé en ce que** les faisceaux de fibres (4) sont fixés en étant orientés selon un angle α de 5 - 45°, en particulier de 5 - 30°, par rapport au plan radial (R) de l'élément annulaire (2).

**3.** Dispositif de mise à la terre selon l'une quelconque des revendications précédentes, **caractérisé en ce que** les faisceaux de fibres (4) sont fixés en étant orientés selon un angle β de 5 - 15° par rapport au plan axial (A) de l'élément annulaire (2),

**4.** Dispositif de mise à la terre selon l'une quelconque des revendications précédentes, **caractérisé en ce que** la longueur, faisant saillie de l'élément annulaire (2) des faisceaux de fibres (4) est plus grande de 5 - 15 %, en particulier de 10 %, que l'espacement radial (L1) de l'élément annulaire (2) par rapport à l'élément de dérivation (5).

**5.** Dispositif de mise à la terre selon l'une quelconque des revendications précédentes, **caractérisé en ce que** des entretoises (7) s'étendant dans une direction radiale, pourvues respectivement de brides (6) sont réalisées, au niveau de l'élément annulaire (2), sous la forme de moyens de retenue (3), au niveau desquels les faisceaux de fibres (4) sont installés par sertissage.

**6.** Dispositif de mise à la terre selon l'une quelconque des revendications précédentes, **caractérisé en ce que** les faisceaux de fibres (4) sont formés par des fibres de matériau différent et comprennent des fibres de carbone et des fibres de métal ou de plastique et/ou des fibres de graphite.

**7.** Dispositif de mise à la terre selon l'une quelconque des revendications précédentes, **caractérisé en ce que** les faisceaux de fibres (4) présentent dans la section transversale une forme ovale.

**8.** Dispositif de mise à la terre selon l'une quelconque des revendications précédentes, **caractérisé en ce qu'**un disque élastique (8) est fixé au niveau de l'élément annulaire (2) de sorte que l'élément annulaire (2) et le disque élastique (8) sont réalisés sous la forme d'une unité modulaire destinée au montage.

**9.** Dispositif de mise à la terre selon la revendication précédente, **caractérisé en ce que** le disque élastique (8) est réalisé de manière à présenter une forme ondulée et est fixé au niveau de l'élément annulaire (2) au niveau de creux récurrents.

**10.** Dispositif de mise à la terre selon les revendications précédentes 8 à 9, **caractérisé en ce que** le disque élastique (8) présente une dimension, qui correspond à celle de l'élément annulaire (2).

**11.** Dispositif de mise à la terre selon l'une quelconque des revendications précédentes, **caractérisé en ce que** l'élément annulaire (2) présente une épaisseur de 0,5 - 5 mm, en particulier de 0,5 - 1 mm.

**12.** Dispositif de mise à la terre selon l'une quelconque des revendications précédentes, **caractérisé en ce que** l'élément annulaire (2) est une tôle en métal estampée composée de laiton ou de bronze.

**13.** Dispositif de mise à la terre selon l'une quelconque des revendications précédentes, **caractérisé en ce que** l'élément annulaire (2) est réalisé sous la forme d'un anneau ouvert pourvu d'une ouverture dans sa périphérie, l'ouverture pouvant être fermée par l'intermédiaire d'un moyen de liaison.

**14.** Dispositif de mise à la terre selon l'une quelconque des revendications précédentes, **caractérisé en ce que** l'élément annulaire (2) présente dans la direction périphérique des échancrures (21) récurrentes, qui offrent une fonction élastique.

EP 3 012 946 B1

Fig. 1

Fig. 2

A β

4

5

Fig. 3

2

8

6

4

Fig. 4

2, 8

10

Fig. 5

6

9

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1460885 B1
- EP 1523086 B1

- US 8199453 B2